# EUROPEAN PATENT APPLICATION

(11) **EP 2 993 577 A1**
(43) Date of publication of application: **09.03.2016**
(21) Application number: 15183563.4
(22) Date of filing: 02.09.2015
(51) Int. Cl.: G06F 3/147, G02B 27/01, G09G 3/00

(54) **METHOD FOR PROVIDING VIRTUAL REALITY SERVICE AND APPARATUS FOR THE SAME**

(30) Priority: 02.09.2014 KR 20140116513
(71) Applicant: Samsung Electronics Co., Ltd., Gyeonggi-do 16677 (KR)
(72) Inventor: LEE, Jin-Goo, 16677 Gyeonggi-do (KR); KANG, Sang-Won, 16677 Gyeonggi-do (KR); CHOI, Woo-Suk, 16677 Gyeonggi-do (KR); CHO, Chi-Hyun, 16677 Gyeonggi-do (KR)
(74) Representative: Jenkins, Richard Gavin

(57) **Abstract**

According to an embodiment of the present disclosure, a method and an electronic device (101), e.g. a mobile phone or a tablet personal computer, for providing a Virtual Reality (VR) service by the electronic device are provided. The method includes determining whether the electronic device is connected with a Head-Mounted Device (HMD), and if the electronic device is connected with the HMD (103), subsequently determining whether a user is wearing the HMD. Then if the user is wearing the HMD, while the electronic device (101) is connected with the HMD (103), switching an operation mode of the electronic device to one in which the electronic device provides the VR service to the user. Otherwise, if the user is not wearing the HMD, the electronic device enters an operation mode by which e.g. a temporary image is displayed.

## Description

### BACKGROUND

### 1. Field of the Invention

The present disclosure relates generally to virtual reality, and more particularly, to methods and apparatuses for providing virtual reality services to users.

### 2. Description of the Related Art

Advancements in information communication and semiconductor technologies are accelerating the usage of various portable terminals. Recently, the functions of portable terminals have gone beyond their normal respective unique functions such as voice calling or text messaging, and the functions of portable terminals have been converging with functions of other portable devices. A representative example of such convergence is mobile communication terminals that offer various additional functions, such as those provided by a TeleVision (TV) (e.g., Digital Multimedia Broadcasting (DMB) or Digital Video Broadcasting (DVB)) and a music player (e.g., a Motion Picture Experts Group (MPEG) Audio Layer-3 (MP3) player), a digital camera, or Internet access, in addition to normal functions including voice calling or text messaging.

A variety of electronic devices that may be worn on users' bodies is currently being developed. Such devices are generally called wearable devices. Examples of wearable devices include a Head-Mounted Device (HMD), smart glasses, a smart watch, a smart wristband, a contact lens-type device, a ring-type device, a shoe-type device, a clothes-type device, and a glove-type device. A wearable device may be shaped to be detached from a part of a human body or clothes. Wearable devices may be directly worn on the human body to present better portability and user accessibility.

An HMD, such as a head-mounted display may be worn on the user's head. Hereinafter, a wearable device wearable on the user's head is referred to as an HMD.

### SUMMARY

An aspect of the present disclosure is to provide at least the advantages described below.

Accordingly, an aspect of the present disclosure provides a method for providing a virtual reality service to a user in connection with a wearable device implemented as an HMD and an electronic device for the same.

According to an embodiment of the present disclosure, a method for providing a Virtual Reality (VR) service by an electronic device is provided. The method includes: determining whether the electronic device is connected with a Head-Mounted Device (HMD); if the electronic device is connected with the HMD, determining whether a user is wearing the HMD while the electronic device is connected with the HMD; and if the user is wearing the HMD while the electronic device is connected with the HMD, switching an operation mode of the electronic device to a first operation mode in which the electronic device provides the VR service to the user.

According to another embodiment of the present disclosure, the method further comprises if the user is not wearing the HMD while the electronic device is connected with the HMD, maintaining a second operation mode.

According to another embodiment of the present disclosure, the determining whether the electronic device is connected with the HMD comprises receiving, from the HMD, an electrical signal indicating that the electronic device is connected with the HMD, and switching the operation mode of the electronic device to the second operation mode.

According to another embodiment of the present disclosure, determining whether the user is wearing the HMD comprises, if receiving from the HMD an electrical signal indicating that the user is wearing the HMD, determining, that the user wears the HMD.

According to another embodiment of the present disclosure the electronic device may receive one or more signals via a wired or wireless communications interface indicating that the electronic device is connected to the HMD and or the using is wearing the HMD.

According to another embodiment of the present disclosure, the method further comprises, if the electronic device does not receive the electrical signal indicating that the user is wearing the HMD, determining that the user does not wear the HMD.

According to another embodiment of the present disclosure, the method further comprises if the electronic device is connected with the HMD, displaying a temporary image and driving a Three-Dimensional (3D) engine to provide the VR service. In other words, when the electronic device is connected to the HMD but the user is not wearing the HMD, the electronic device may enter a standby-type mode where a temporary image is displayed by the electronic device.

According to another embodiment of the present disclosure, the temporary image includes at least one of a black image, a logo image, and an image preset by the user.

According to another embodiment of the present disclosure, determining whether the electronic device is connected with the HMD comprises sensing whether the electronic device is connected with the HMD through a previously provided communication interface. The communications interface may be a communications interface of the electronic device or of the HMD and may be a wired or a wireless communications interface.

According to another embodiment of the present disclosure, determining whether the user is wearing the HMD while the electronic device is connected with the HMD comprises sensing whether the user is wearing the HMD through a previously provided sensor module, and if sensing that the user wears the HMD through the previously provided sensor module previously provided, determining that the user wears the HMD. In other words, if the electronic device is connected to the HMD and the HMD is being worn by a user, the electronic device is configured to provide a VR service, and if the electronic device is connected to the HMD but the HMD is not being word by a user, the electronic device is configured to display a temporary image.

According to some embodiments, the electronic device may determine whether it is connected to the HMD and whether the HMD is being worn by a user based on one or more signals provided by connectors or modules of the electronic device and or based on one or more signals provided from the HMD via a wireless or wireless communications interface.

According to an embodiment of the present disclosure, an electronic device for providing a Virtual Reality (VR) service is provided. The electronic device includes: a display; and a processor configured to: determine whether a user is wearing a Head-Mounted Device (HMD), and if the user is wearing the HMD, switching to a first operation mode of the electronic device in which the electronic device provides the VR service to the user through the display.

According to an embodiment of the present disclosure, an electronic device for providing a VR service is provided. The electronic device includes a display, and a processor configured to determine whether the electronic device is connected with a HMD, and if the electronic device is connected with the HMD, to determine whether a user is wearing the HMD whilst the electronic device is connected with the HMD, and if the user is wearing the HMD whilst the electronic device is connected with the HMD, switch an operation modes of the electronic device to a first operation mode in which the electronic device provides the VR service to the user i.e. display VR images via the display of the electronic device to the user.

According to an embodiment of the present disclosure, a method for providing a Virtual Reality (VR) service by a Head-Mounted Device (HMD) is provided. The method includes sensing whether a user is wearing the HMD while the HMD is connected with an electronic device; and transmitting either by wired means or wirelessly, to the electronic device, if the user is wearing the HMD, a first signal, such as an electrical signal for example, indicating that the user is wearing the HMD.

According to an embodiment of the present disclosure, a Head-Mounted Device (HMD) for providing a Virtual Reality (VR) service is provided. The HMD includes a sensor module configured to sense whether a user is wearing the HMD; and a wired or wireless communication interface configured to transmit, to an electronic device, if the user is wearing the HMD, a first signal, such as an electrical signal for example, indicating that the user is wearing the HMD.

Another aspect of the present disclosure provides a computer program comprising instructions arranged, when executed, to implement a method and/or apparatus in accordance with any one of the above-described aspects or embodiments. A further aspect provides machine-readable storage storing such a program.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a diagram illustrating a network environment including an electronic device according to an embodiment of the present disclosure;
FIG. 2 is a diagram illustrating a Head-Mounted Device (HMD) and an electronic device 101 coupled with the HMD according to an embodiment of the present disclosure;
FIG. 3 is a diagram illustrating an example of an HMD according to an embodiment of the present disclosure;
FIG. 4 is a diagram illustrating an example of an HMD according to an embodiment of the present disclosure;
FIG. 5 is a diagram illustrating an example in which an electronic device is attached to an HMD according to an embodiment of the present disclosure;
FIG. 6 is a diagram illustrating an example in which a user wears an electronic device-attached HMD 103 according to an embodiment of the present disclosure;
FIGs. 7A to 7D are diagrams illustrating examples of attaching an electronic device to an HMD 103 according to an embodiment of the present disclosure;
FIGs. 8A to 8B are diagrams illustrating an example of attaching an electronic device to an HMD 103 according to an embodiment of the present disclosure;
FIG. 9 is a diagram illustrating an example of a rear surface of an HMD according to an embodiment of the present disclosure;
FIG. 10 is a diagram illustrating an example of a rear surface of an HMD according to an embodiment of the present disclosure;
FIG. 11 is a block diagram illustrating an HMD according to an embodiment of the present disclosure;
FIG. 12 is a flowchart illustrating a method for providing a virtual reality (VR) service by an electronic device according to an embodiment of the present disclosure;
FIGs. 13A and 13B are diagrams illustrating an example of displaying a monoscopic image and a stereoscopic image by an electronic device according to an embodiment of the present disclosure;
FIG. 14 is a diagram illustrating an example of displaying a monoscopic image and a stereoscopic image by an electronic device according to an embodiment of the present disclosure;
FIG. 15 is a diagram illustrating an example of providing a VR service by an electronic device according to an embodiment of the present disclosure;
FIG. 16 is a block diagram illustrating an electronic device according to an embodiment of the present disclosure; and
FIG. 17 is a block diagram illustrating a program module according to an embodiment of the present disclosure.

### DETAILED DESCRIPTION OF EMBODIMENTS OF THE PRESENT DISCLOSURE

Hereinafter, embodiments of the present disclosure are described with reference to the accompanying drawings. However, it should be appreciated that the present disclosure is not limited to the described embodiments, and all changes and/or equivalents or replacements thereto also belong to the scope of the present disclosure. The same or similar reference denotations may be used to refer to the same or similar elements throughout the specification and the drawings.

As used herein, the terms "have," "may have," "include," or "may include" a feature (e.g., a number, function, operation, or a component such as a part) indicate the existence of the feature and do not exclude the existence of other features.

Throughout the description and claims of this specification, the words "comprise" and "contain" and variations of the words, for example "comprising" and "comprises", means "including but not limited to", and is not intended to (and does not) exclude other moieties, additives, components, integers or steps.

Features, integers, characteristics, compounds, chemical moieties or groups described in conjunction with a particular aspect, embodiment or example of the disclosure are to be understood to be applicable to any other aspect, embodiment or example described herein unless incompatible therewith.

As used herein, the terms "A or B," "at least one of A and/or B," or "one or more of A and/or B" include all possible combinations of A and B. For example, "A or B," "at least one of A and B," "at least one of A or B" may indicate all of (1) including at least one A, (2) including at least one B, or (3) including at least one A and at least one B.

As used herein, the terms "first" and "second" may modify various components regardless of importance and do not limit the components. These terms are merely used to distinguish one component from another. For example, a first user device and a second user device may indicate different user devices from each other regardless of the order or importance of the devices. For example, a first component may be referrefed to as a second component, and vice versa without departing from the scope of the present disclosure.

It will be understood that when an element (e.g., a first element) is referred to as being (operatively or communicatively) "coupled with/to," or "connected with/to" another element (e.g., a second element), the element can be coupled or connected with/to the other element directly or via a third element. In contrast, when an element (e.g., a first element) is referred to as being "directly coupled with/to" or "directly connected with/to" another element (e.g., a second element), no other element (e.g., a third element) intervenes between the element and the other element.

As used herein, the term "configured (or set) to" may be interchangeably used with the terms "suitable for," "having the capacity to," "designed to," "adapted to," "made to," or "capable of" depending on circumstances. The term "configured (or set) to" is not defined as "specifically designed in hardware to." Rather, the term "configured to" may indicate that a device can perform an operation together with another device or parts. For example, the term "processor configured (or set) to perform A, B, and C" may refer to a generic-purpose processor (e.g., a Central Processing Unit (CPU) or application processor) that may perform the operations by executing one or more software programs stored in a memory device or a dedicated processor (e.g., an embedded processor) for performing the operations.

The terms as used herein are provided merely to describe certain embodiments of the present disclosure, but not to limit the scope of other embodiments of the present disclosure. The singular forms, as used herein, "a," "an," and "the" include plural references unless the context clearly dictates otherwise. All terms including technical and scientific terms used herein have the same meaning as commonly understood by one of ordinary skill in the art to which the embodiments of the present disclosure belong. It will be further understood that terms, such as those defined in commonly used dictionaries, should be interpreted as having meanings that are consistent with their meaning in the context of the relevant art and will not be interpreted in an idealized or overly formal sense unless expressly so defined herein. In some cases, the terms defined herein may be interpreted to exclude embodiments of the present disclosure.

For example, examples of the electronic device according to embodiments of the present disclosure may include at least one of a smartphone, a tablet Personal Computer (PC), a mobile phone, a video phone, an e-book reader, a desktop PC, a laptop computer, a netbook computer, a workstation, a Personal Digital Assistant (PDA), a Portable Multimedia Player (PMP), an MP3 player, a mobile medical device, a camera, or a wearable device (e.g., smart glasses, a Head-Mounted Device (HMD), electronic clothes, an electronic bracelet, an electronic necklace, an electronic appcessory, an electronic tattoo, a smart mirror, or a smart watch).

According to an embodiment of the present disclosure, the electronic device may be a smart home appliance. For example, examples of the smart home appliance may include at least one of a television, a Digital Versatile Disc (DVD) player, an audio player, a refrigerator, an air conditioner, a cleaner, an oven, a microwave oven, a washer, a drier, an air cleaner, a set-top box, a home automation control panel, a security control panel, a TV box (e.g., Samsung HomeSync^{™}, Apple TV^{™}, or Google TV^{™}), a gaming console (e.g., Xbox™, PlayStation™), an electronic dictionary, an electronic key, a camcorder, or an electronic picture frame.

According to an embodiment of the present disclosure, an electronic device may include at least one of various medical devices (e.g., diverse portable medical measuring devices, such as a blood sugar measuring device, a heartbeat measuring device, or a body temperature measuring device), a Magnetic Resource Angiography (MRA) device, a Magnetic Resource Imaging (MRI) device, a Computed Tomography (CT) device, an imaging device, or an ultrasonic device), a navigation device, a Global Positioning System (GPS) receiver, an Event Data Recorder (EDR), a Flight Data Recorder (FDR), an automotive infotainment device, an sailing electronic device (e.g., a sailing navigation device or a gyro compass), avionics, security devices, vehicular head units, industrial or home robots, Automatic Teller's Machines (ATMs), Point Of Sales (POS) devices, or Internet of Things devices (e.g., a bulb, various sensors, an electric or gas meter, a sprinkler, a fire alarm, a thermostat, a street light, a toaster, fitness equipment, a hot water tank, a heater, or a boiler).

According to various embodiments of the disclosure, an electronic device may include at least one of a part of furniture or building/structure, an electronic board, an electronic signature receiving device, a projector, or various measurement devices (e.g., devices for measuring water, electricity, gas, or electromagnetic waves). According to an embodiment of the present disclosure, the electronic device may include one of or a combination of the above-listed devices. According to an embodiment of the present disclosure, the electronic device may be a flexible electronic device. Electronic devices according to embodiments of the present disclosure are not limited to the above-listed devices, and may include new electronic devices depending on the development of technology.

Hereinafter, electronic devices according to various embodiments of the present disclosures are described with reference to the accompanying drawings. As used herein, the term "user" may refer to a human or another device (e.g., an artificial intelligence electronic device) using the electronic device.

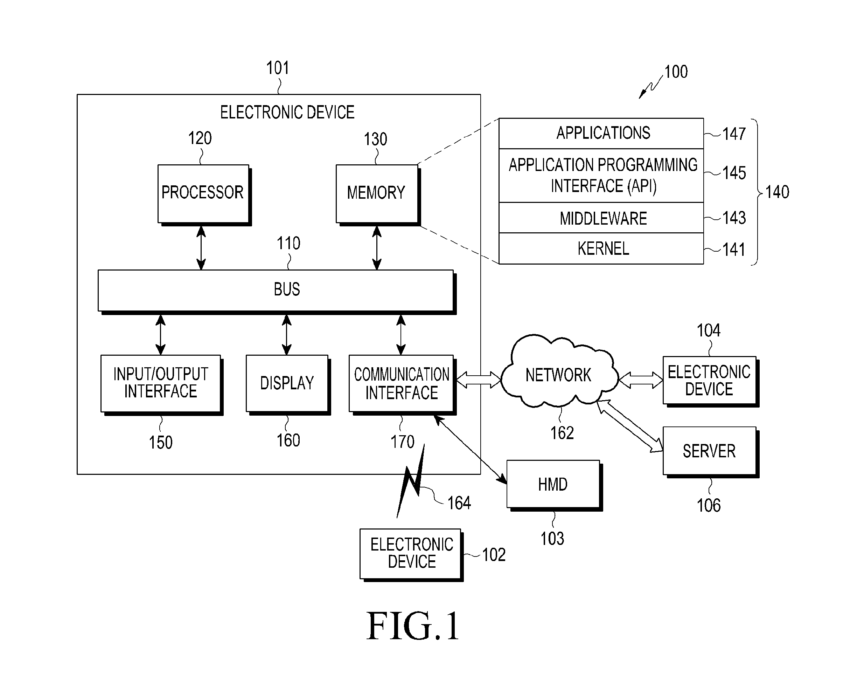

FIG. 1 illustrates a network environment including an electronic device according to an embodiment of the present disclosure.

Referring to FIG. 1, an electronic device 101 in a network environment 100 includes a bus 110, a processor 120, a memory 130, an input/output interface 150, a display 160, and a communication interface 170. In some alternative embodiments of the present disclosure, the electronic device 101 may exclude at least one of the above-described components and/or may add one or more other components.

The bus 110 includes a circuit for connecting the components 120 to 170 with one another and transferring communications (e.g., control messages and/or data) between the components 120 to 170.

The processing module 120 includes one or more of a CPU, an Application Processor (AP), and a Communication Processor (CP). The processor 120 controls at least one of the other components of the electronic device 101, and/or performs an operation or data processing relating to communication.

The processor 120 is able to recognize whether the electronic device 101 is attached to an HMD 103 based on a signal transferred from the HMD 103 through the communication interface 170. When the electronic device 101 is attached to the HMD 103, the processor 120 is able to determine whether the HMD 103 is worn by a user. The processor 120 is able to recognize whether the user is wearing the HMD 103 based on a signal transferred from the HMD 103 through the communication interface 170. When the HMD 103 is attached to the electronic device 101 while being worn by the user, the processor 120 controls the electronic device 101 to provide a Virtual Reality (VR) service to the user. The processor 120 provides a VR service to the user by displaying a stereoscopic image through the display 160. According to an embodiment of the present disclosure, the processor 120 displays, through the display 160, a stereoscopic image that is stored in the memory 130 or an external device (e.g., the electronic devices 102 and 104 or server 106). Alternatively, the processor 120 may convert, into a stereoscopic image, a monoscopic image that is stored in the memory 130 or an external device (e.g., the electronic devices 102 and 104 or server 106). The stereoscopic image includes a left eye image and a right eye image. The left eye image and the right eye image may be same images or may be different images. A left eye image and a right image in a three-dimensional (3D) may indicate different images. The left eye image and the right eye image may be simultaneously displayed, and the user may feel a 3D effect from the image by a combination of the different left eye image and right eye image simultaneously displayed.

The processor 120 controls the electronic device 101 to display, in 3D, various User Interfaces (UIs) or User Experiences (UXs) that are displayed through the display 160. According to an embodiment of the present disclosure, the processor 120 controls the electronic device 101 to display 3D images and Two-Dimensional (2D) images together depending on user inputs.

According to an embodiment of the present disclosure, when the electronic device 101 is attached to the HMD 103, the processor 120 controls the display 160 to display a temporary image. The temporary image may be, e.g., a black image, a still image or motion picture preset by the user. The temporary image may be, e.g., an image including a white image or logo.

According to an embodiment of the present disclosure, when the electronic device 101 receives a call while the user is receiving a VR service through the electronic device 101 attached to the HMD 103, the processor 120 may control the display 160 to display the reception of the call. In this case, the display 160 may display and provide the caller's number of the call, the caller's name or nick name, or the caller's image to the user. When the user enters a user input to the electronic device 101 or the HMD 103 to proceed with the phone talking for the call, the processor 120 may control the electronic device 101 or the HMD 103 to perform a voice call or video call corresponding to the call.

The memory 130 may include a volatile and/or non-volatile memory. For example, the memory 130 may store commands or data related to at least one other component of the electronic device 101. According to an embodiment of the present disclosure, the memory 130 stores software and/or programs 140. The programs 140 include, for example, a kernel 141, middleware 143, an Application Programming Interface (API) 145, and/or application programs (or "applications") 147. At least a portion of the kernel 141, middleware 143, or API 145 may be denoted an Operating System (OS).

For example, the kernel 141 controls and/or manages system resources (e.g., the bus 110, processor 120, or a memory 130) used to perform operations or functions implemented in other programs (e.g., the middleware 143, API 145, or applications 147). The kernel 141 provides an interface that allows the middleware 143, the API 145, or the applications 147 to access the individual components of the electronic device 101 to control or manage the system resources.

The middleware 143 functions as a relay to allow the API 145 or the applications 147 to communicate data with the kernel 141, for example. A plurality of applications 147 may be provided. The middleware 143 controls work requests received from the applications 147, e.g., by allocation the priority of using the system resources of the electronic device 101 (e.g., the bus 110, the processor 120, or the memory 130) to at least one of the plurality of applications 134.

The API 145 is an interface allowing the applications 147 to control functions provided from the kernel 141 or the middleware 143. For example, the API 133 may include at least one interface or function (e.g., a command) for filing control, window control, image processing or text control.

The input/output interface 150 serves as an interface that, e.g., transfer commands or data input from a user or other external devices to other component(s) 110 to 140 or 160 to 170 of the electronic device 101. The input/output interface 150 also outputs commands or data received from other component(s) 110 to 140 or 160 to 170 of the electronic device 101 to the user or the other external device.

The display 160 may include, e.g., a Liquid Crystal Display (LCD), a Light Emitting Diode (LED) display, an Organic LED (OLED) display, a MicroElectroMechanical Systems (MEMS) display, or an electronic paper display. The display 160 displays, for example, various contents (e.g., text, images, videos, icons, or symbols) to the user. The display 160 may include a touchscreen and may receive, e.g., a touch, gesture, proximity or hovering input using an electronic pen or a body portion of the user.

According to an embodiment of the present disclosure, the display 160 may display a monoscopic image or a stereoscopic image. The display 160 provides a VR service to the user by displaying the stereoscopic image.

For example, the communication interface 170 may set up communication between the electronic device 101 and an external device (e.g., a first electronic device 102, a second electronic device 104, or a server 106). For example, the communication interface 170 may be connected with the network 162 through wireless or wired communication to communicate with the external electronic device.

According to an embodiment of the present disclosure, the communication interface 170 may receive a signal transferred from the HMD 103. When the electronic device 101 is attached to the HMD 103, the HMD 103 transmits, to the electronic device 101, a signal to inform the electronic device 101 that the electronic device 101 has been attached to the HMD 103. The communication interface 170 receives the signal and transfers the signal to the processor 120. The communication interface 170 receives, from the HMD 103, a signal to inform the electronic device 101 that the user is wearing the HMD 103 and transfers the signal to the processor 120. According to an embodiment of the present disclosure, the electric signal to indicate that the electronic device 101 is attached to the HMD 103 may be transferred to the communication interface 170 of the electronic device 101 from the HMD 103 through short-range wireless communication (e.g., near-field communication (NFC) or Bluetooth). According to an embodiment of the present disclosure, when the electronic device 101 is attached to the HMD 103, an earth magnetic field signal may be generated to indicate that the electronic device 101 is attached to the HMD 103. The earth magnetic field signal may be transferred from the HMD 103 to the electronic device 101, so that the processor 120 may recognize that the processor 120 is attached to the electronic device 101.

According to an embodiment of the present disclosure, the processor 120 senses, through the communication interface 170, whether the HMD 103 is mounted on the electronic device 101. The communication interface 170 may be implemented to have a Universal Serial Bus (USB) or socket and the communication interface 170 may be connected with the HMD 103 via the USB or socket. When the electronic device 101 is connected with the HMD 103, the communication interface 170 generates a signal to indicate that the HMD 103 has been connected to the communication interface 170 and transfers the generated signal to the processor 120.

The wireless communication may use at least one of, e.g., Long Term Evolution (LTE), LTE- Advanced (LTE-A), Code Division Multiple Access (CDMA), Wideband CDMA (WCDMA), Universal Mobile Telecommunication System (UMTS), WIreless BROadband (WiBro), or Global System for Mobile communication (GSM), as a cellular communication protocol. The wired connection may include at least one of USB, High Definition Multimedia Interface (HDMI), Recommended Standard 232 (RS-232), or Plain Old Telephone Service (POTS). The network 162 includes at least one of telecommunication networks, e.g., a computer network (e.g., Local Area Network (LAN) or Wide Area Network (WAN)), Internet, or a telephone network.

The first and second external electronic devices 102 and 104 each may be a device of the same or a different type from the electronic device 101. According to an embodiment of the present disclosure, the server 106 may include a group of one or more servers.

According to an embodiment of the present disclosure, all or some of operations executed on the electronic device 101 may be executed on another or multiple other electronic devices 102 and 104 or server 106. According to an embodiment of the present disclosure, when the electronic device 101 is expected to perform some function or service automatically or in response to a request, the electronic device 101, instead of executing the function or service on its own, may request another electronic device 102, 104 or server 106 to perform at least some functions associated therewith. The other electronic device 102, 104 or server 106 may execute the requested functions or additional functions and transfer a result of the execution to the electronic device 101. The electronic device 101 may provide a requested function or service by processing the received result as it is or additionally. To that end, a cloud computing, distributed computing, or client-server computing technique may be used, for example.

According to an embodiment of the present disclosure, an electronic device for providing a Virtual Reality (VR) service is provided. The electronic device includes: a display; and a processor configured to: determine whether a user is wearing a Head-Mounted Device (HMD), and if the user is wearing the HMD, switching to a first operation mode of the electronic device in which the electronic device provides the VR service to the user through the display.

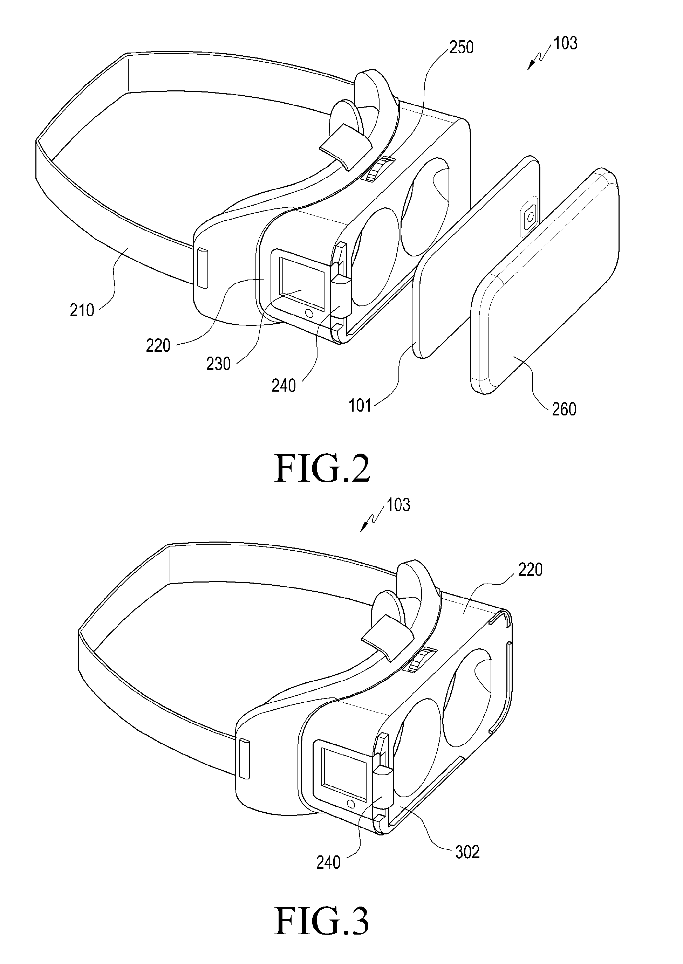

FIG. 2 is a diagram illustrating a Head-Mounted Device (HMD) and an electronic device coupled with the HMD according to an embodiment of the present disclosure.

Referring to FIG. 2, the HMD 103 includes a mount 210, a main frame 220, a touch panel 230, a connector 240, a location adjuster 250, and a cover 260.

The mount 210 is coupled to the main frame 220 to fasten the HMD 103 to part, e.g., head, of the user's body. According to an embodiment of the present disclosure, the mount 210 may include a band formed of an elastic material to bring the main frame 220 in tight contact with an area around the user's eyes. According to an embodiment of the present disclosure, the mount 210 may include eyeglass temples, a helmet, or a strap.

The main frame 220 includes a space and structure that receives the electronic device 101 to enable the attachment of a display device (e.g., the electronic device 101). The connector 240 is formed at a left end or right end of the main frame 220 to allow for a coupling to an electrical connector (e.g., a USB port) of the electronic device 101. According to an embodiment of the present disclosure, the band 220 for adjustment is configured to enable the electronic device 101 to be detachably coupled to the connector 240.

The touch panel 230, the location adjuster 250, or a lens adjuster is provided, as user interfaces, on an outer surface of the main frame 220.

According to an embodiment of the present disclosure, a controller may be provided on a side surface of the main frame 220 to control the electronic device 101. The controller may include one or more of, e.g., a physical key, a physical button, a touch key, a joystick, a wheel key, or a touch pad. The touch pad may display a Graphical User Interface (GUI) that enables the control of various functions of the electronic device 101. The GUI may be a GUI for controlling, e.g., a sound or image output.

The touch panel 230 may receive a user input, e.g., a touch input or hovering input from the user. The electronic device 101 and the band 220 for adjustment may be connected with each other via an interface, such as USB. For example, a USB port of the communication interface 170 may be connected with a USB port provided at an outer side of the main frame 220, so that the electronic device 101 is connected with the HMD 103. A user input received by the touch panel 230 may be transferred to the processor 120 of the electronic device 101 through the USB ports. The processor 120 of the electronic device 101 may control the electronic device 101 to run a function corresponding to the user input received through the touch panel 230. For example, the electronic device 101 may adjust the sound volume or control the playback of still images or a motion picture according to a touch input received through the touch panel 230.

The connector 240 is coupled with an electrical connector of the electronic device 101 to enable the HMD 103 to communicate with the electronic device 101. According to an embodiment of the present disclosure, the HMD 103 receives power from the electronic device 101 through the connector 240.

The location adjuster 250 adjusts the location of the electronic device 101. As shown in FIG. 2, the location adjuster 250 is implemented as a wheel. The user is able to move the location of the electronic device 101 attached to the main frame 220 to the left or right by spinning the wheel to the left or right. According to an embodiment of the present disclosure, the location adjuster 250 may be implemented as a wheel that enables the electronic device 101 to move up or down.

The cover 260 covers the electronic device 101 attached to the HMD 103 to fasten the electronic device 101 to the main frame 220 of the HMD 103.

FIG. 3 is a diagram illustrating an example of an HMD according to an embodiment of the present disclosure.

Referring to FIG. 3, a space 302 is formed in a surface of the main frame 220 to receive the electronic device 101. The part of the main frame 220 where the space 302 is formed may include an elastic material. The part of the main frame 220 where the space 302 is formed may include a flexible material to change the size of the space 302 so that various sizes of electronic device 101 are able to fit into the space 302.

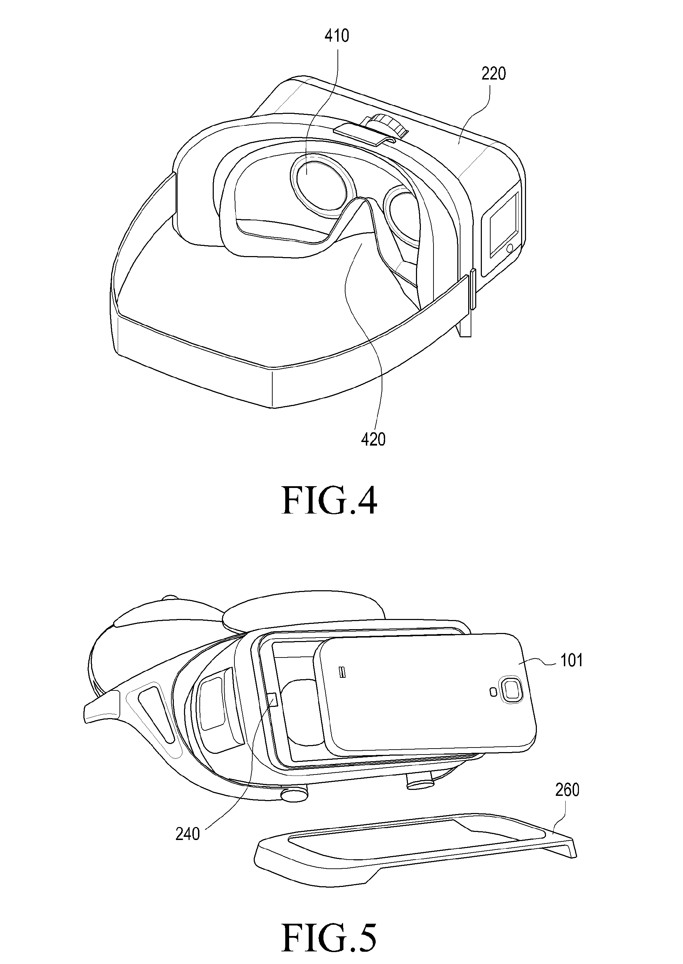

FIG. 4 is a diagram illustrating an example of an HMD according to an embodiment of the present disclosure.

As shown in FIG. 4, the main frame 220 further includes a part that contacts the user's face (hereinafter, a "face contact") when worn. The face contact is structured to correspond to the curves or bends of the user's face and is implemented to have, at least partially, an elastic body. In particular, a portion of the face contact includes a nose recess 420 shaped to fit over the user's nose. Further, a lens assembly including at least one lens 410 is inserted at a position facing the user's eyes in the face contact. Further, at least one surface of the at least one lens 410 in the face contact of the HMD 103 may be implemented to be exposed. Thus, the user may view the screen of a display device, i.e., the electronic device 101, through the lens 410 whenever wearing the HMD 103.

According to an embodiment of the present disclosure, when the electronic device 101 generates a stereoscopic image and displays the stereoscopic image on the screen, the processor 120 generates the stereoscopic image to at least equal to a size of the lens 410.

The main frame 220 includes a relatively light material (e.g., plastic) to allow the user to easily wear the HMD 103. The main frame 220 may be implemented to include at least one of other various materials, e.g., glass, ceramic, a metal (e.g., aluminum), or a metal alloy (e.g., an alloy of steel, stainless steel, titanium, or magnesium) for better intensity or outer look.

FIG. 5 is a diagram illustrating an example in which an electronic device is attached to an HMD according to an embodiment of the present disclosure.

Referring to FIG. 5, the electronic device 101 is attached to the HMD 103, with a rear surface of the electronic device 101 positioned front-facing. In other words, the electronic device 101 is attached to the HMD 103, while the display screen of the electronic device 101 faces a front surface of the HMD 103. Accordingly, when the user wears the HMD 103, the display screen of the electronic device 101 is viewed by the user's eyes.

Further, the electronic device 101 is coupled with the connector 240 of the HMD 103 to be attached to the HMD 103. For example, the connector 240 may include a USB connector. The USB port of the connector 240 is physically coupled with the USB connector previously equipped in the electronic device 101, so that the electronic device 101 and the HMD 103 are directly connected with each other. According to an embodiment of the present disclosure, the HMD 103 receives power from the electronic device 101 through the USB connector.

The cover 206 of the HMD 103 is attached onto the electronic device 101 to cover the electronic device 101 after the electronic device 101 is attached to the HMD 103.

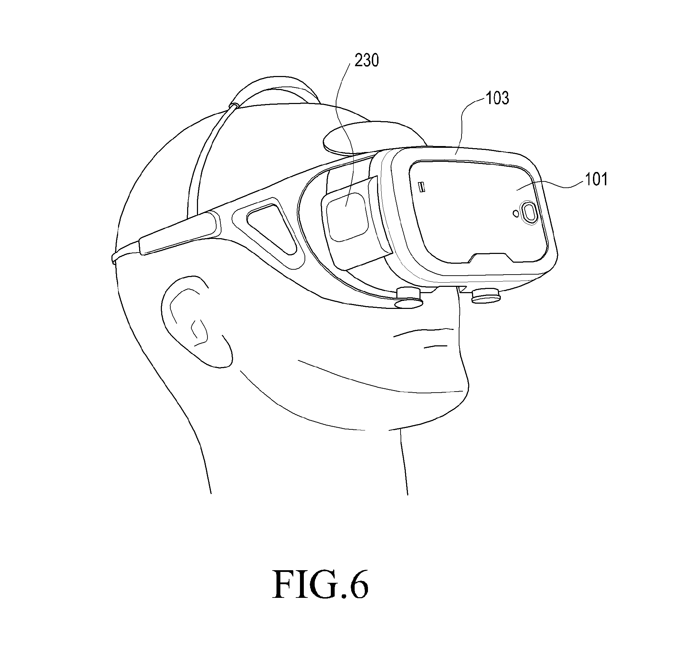

FIG. 6 is a diagram illustrating an example in which a user wears an HMD attached to an electronic device according to an embodiment of the present disclosure.

Referring to FIG. 6, the HMD 103 receives a user input (e.g., a touch input or hovering input) through the touch panel 230 positioned at a right side of the HMD 103.

As shown in FIG. 6, the cover 260 is implemented to cover only a portion of the electronic device 101 rather than the overall surface of the electronic device 101. Thus, the user may use the camera mounted on the rear surface of the electronic device 101. In this case, a user input may be received through the touch panel 230 of the HMD 103 to use the camera. According to an embodiment of the present disclosure, the electronic device 101 may receive a gesture input from the user through the camera lens provided on the rear surface thereof.

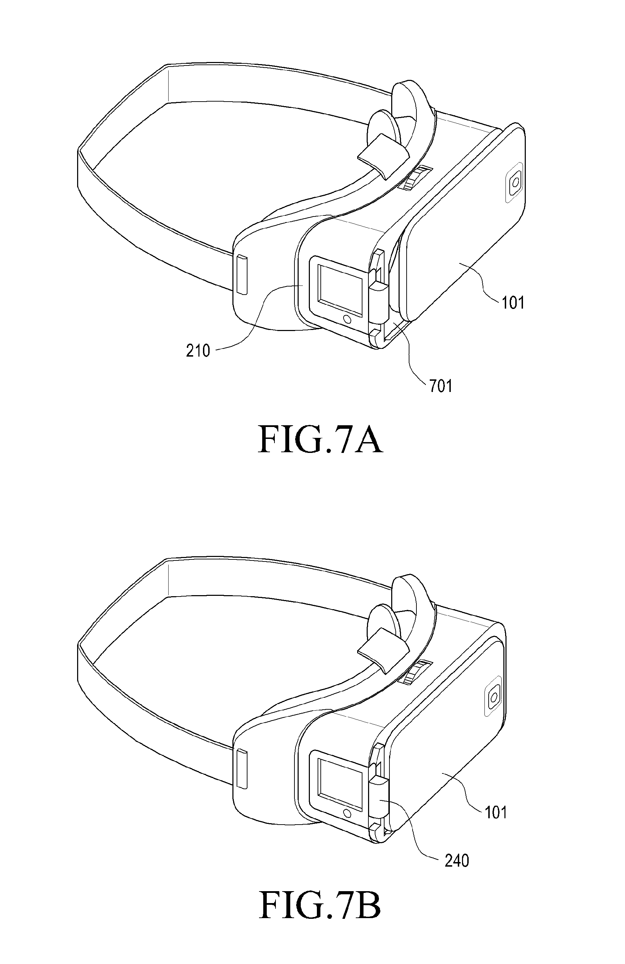

FIGs. 7A to 7D are diagrams illustrating an example of attaching an electronic device to an HMD according to an embodiment of the present disclosure. The electronic device may be attached to the HMD in the order of FIGs. 7A to 7D.

Referring to FIG. 7A, the electronic device 101 is seated in the space 701 of the main frame 220 to be attached to the HMD 103. The user may attach the electronic device 101 to the HMD 103 by press-fitting the electronic device 101 into the space 701.

Referring to FIG. 7B, the electronic device 101 may be connected with the HMD 103 through the connector 240. According to an embodiment of the present disclosure, the connector 240 includes a USB port and is connected with a USB port included in the electronic device 101. The user connects the connector 240 with the electronic device 101 by sliding the electronic device 101 seated on the main frame 220. The USB port of the electronic device 101 may be an electrical connector, and the electronic device 101 may receive power from an external device through the USB port or may supply power to the HMD 103 through the USB port.

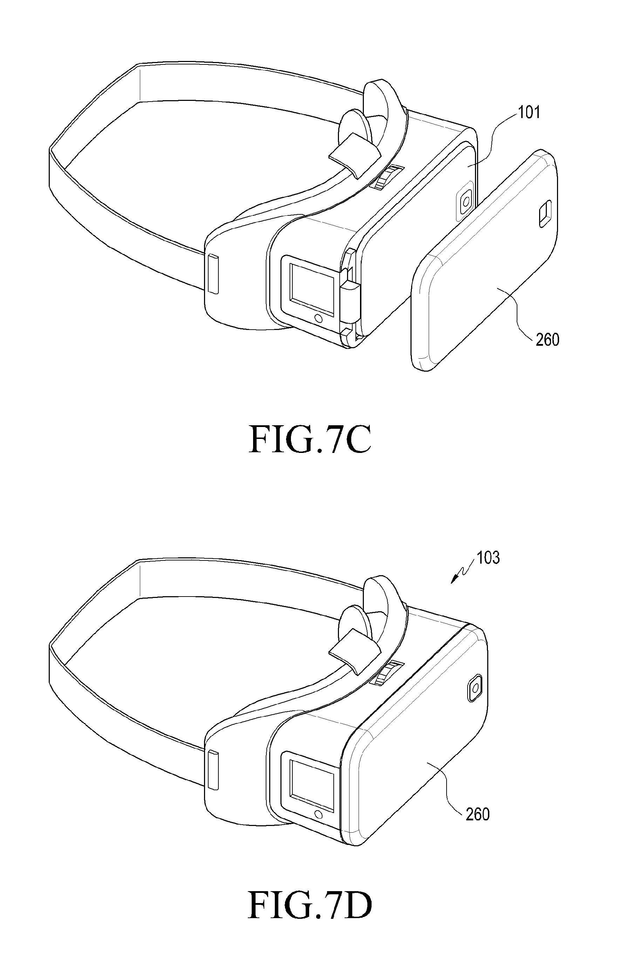

Referring to FIG. 7C, when the electronic device 101 remains seated on the main frame 220 of the HMD 103, the cover 260 may be attached onto the rear surface of the electronic device 101. The user may assemble the cover 260 to the main frame 220 so that the cover 260 may fully cover the rear surface of the electronic device 101.

FIG. 7D illustrates an example in which the cover 260 is completely coupled to the main frame 220. As shown in FIG. 7D, when the electronic device 101 is attached to the HMD 103, the user may wear the HMD 103 to receive a Virtual Reality (VR) service from the electronic device 101.

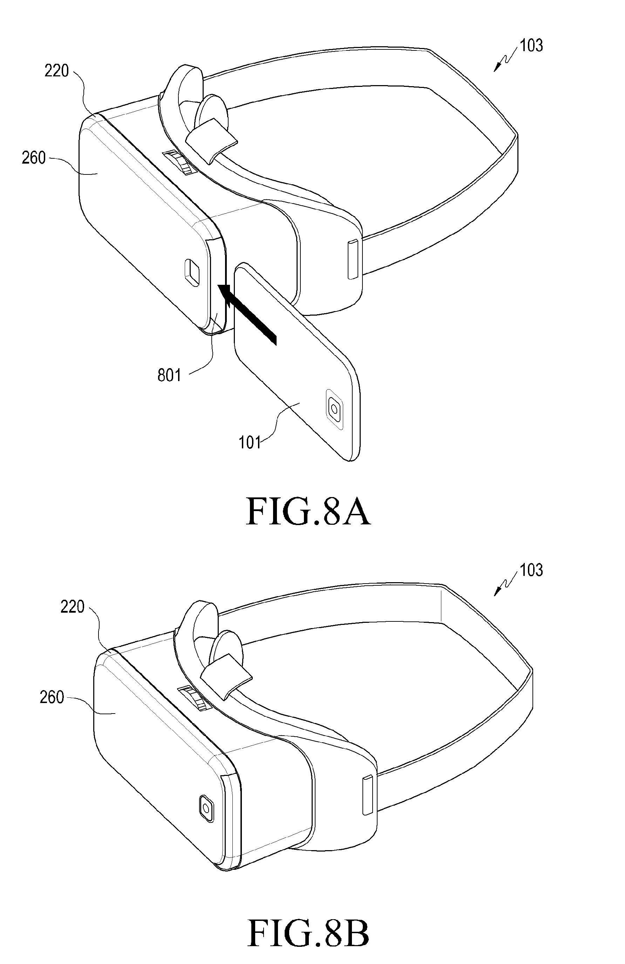

FIGs. 8A to 8B are diagrams illustrating an example of attaching an electronic device to an HMD according to an embodiment of the present disclosure. The electronic device may be attached to the HMD in the order of FIGs. 8A and 8B.

Referring to FIG. 8A, the cover 260 of the HMD 103 already remains coupled to the main frame 220. As shown in FIG. 8A, when the cover 260 is attached to the main frame 220, a slot 810 is created between the main frame 220 and the cover 260. The user may attach the electronic device 101 to the HMD 103 by sliding and fitting the electronic device 101 into the slot 801.

FIG. 8B illustrates an example in which the electronic device 101 is fully attached to the HMD 103. As shown in FIG. 8B, when the electronic device 101 is attached to the HMD 103, the user may wear the HMD 103 to receive a Virtual Reality (VR) service from the electronic device 101.

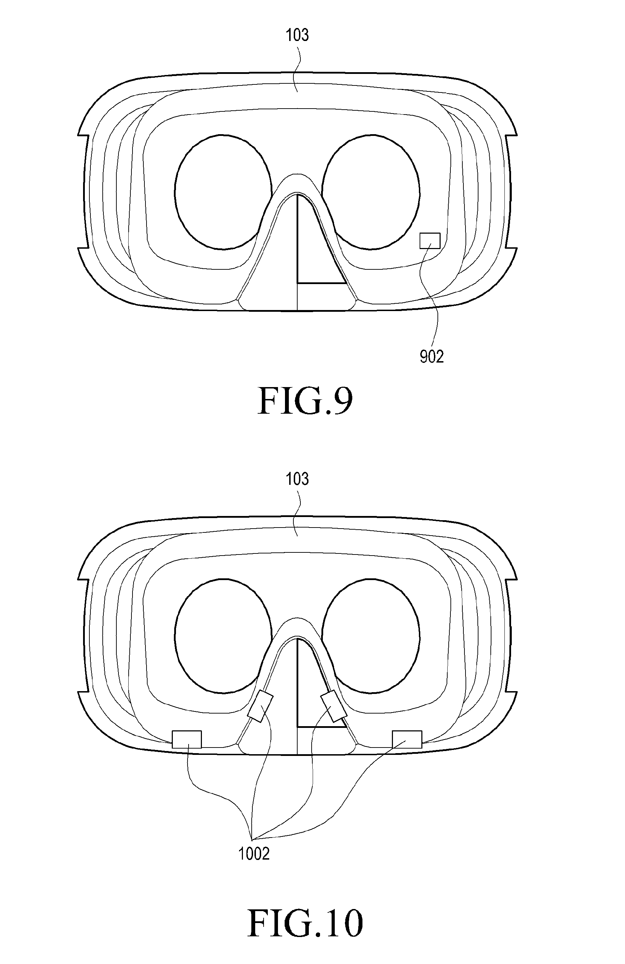

FIG. 9 is a diagram illustrating an example of a rear surface of an HMD according to an embodiment of the present disclosure.

Referring to FIG. 9, a proximity sensor 902 may be provided on the rear surface, i.e., the face contact, of the HMD 103. According to an embodiment of the present disclosure, the proximity sensor 902 is a proximity illuminance sensor. The proximity illuminance sensor senses whether an object approaches the sensor or senses the brightness of ambient light. The proximity illuminance sensor may generate an electrical signal corresponding to the intensity of light. The HMD 103 or the electronic device 101 may determine the brightness of light around the HMD 103, particularly, the brightness of light at the rear surface of the HMD 103, based on the electrical signal generated by the proximity illuminance sensor. The HMD 103 or the electronic device 101 may determine whether the user is wearing the HMD 103 based on the brightness of light at the rear surface of the HMD 103.

According to an embodiment of the present disclosure, the proximity sensor 902 may be implemented as an InfraRed (IR) sensor. The IR sensor may generate IR signals in a direction perpendicular to the IR sensor and may sense the strength of reflections of the IR signals. The IR sensor may convert the strength of an IR reflection into an electrical signal and may transfer the converted signal to the electronic device 101 or the HMD 103.

The electronic device 101 or the HMD 103 may determine whether the user is wearing the HMD 103 based on the strength of the IR signal. The IR signal generated by the IR sensor may be reflected to the IR sensor by the user's face. Accordingly, the signal strength may be greater when the user is wearing the HMD 103 than a signal strength when the user is not wearing the HMD 103. Thus, when the signal strength is greater than a predetermined reference, the electronic device 101 or the HMD 103 may determine that the user is wearing the HMD 103.

FIG. 10 is a diagram illustrating an example of a rear surface of an HMD according to an embodiment of the present disclosure.

Referring to FIG. 10, a plurality of mount/unmount sensors 1002 is provided on the rear surface, i.e., the face contact, of the HMD 103. According to an embodiment of the present disclosure, the mount/unmount sensors 1002 may include a sensor that senses an electrostatic material, e.g., a touch sensor or grip sensor. Further, the mount/unmount sensors 1002 may include a sensor for identifying bio information on the user, e.g., an ElectroMyoGraphy (EMG) sensor, an EleCtrocardioGram (ECG) sensor, or a body temperature sensor. The mount/unmount sensors 1002 may include a sensor (e.g., a camera) that senses an object.

As shown in FIG. 10, the mount/unmount sensors 1002 is provided at positions that contact the user's face to sense an event in which the user is wearing the HMD 103 (hereinafter, a "mount event") or an event where the user is not wearing the HMD 103 or takes off the HMD 103 (hereinafter, an "unmount event"). The electronic device 101 or the HMD 103 sense a mount event or unmount event generated by the mount/unmount sensor 1002 and may run operations respectively corresponding to the events.

According to an embodiment of the present disclosure, the mount/unmount sensor 1002 may be implemented as a physical button. When the mount/unmount sensor 1002 is implemented as a physical button, the button may be pressed by the user's face when the user wears the HMD 103. In other words, when the physical button is pressed by the user's face, the HMD 103 or the electronic device 101 determines that a mount event has occurred. Similarly, when the physical button is not pressed, even though the electronic device 101 is attached to the HMD 103, the HMD 103 or the electronic device 101 determines that an unmount event has occurred. Further, when the pressed button is returns to an original position as the user takes off the HMD 103, the HMD 103 or the electronic device 101 determines that an unmount event has occurred. The electronic device 101 or the HMD 103 may sense a mount event or unmount event generated by the physical button and may run operations respectively corresponding to the events.

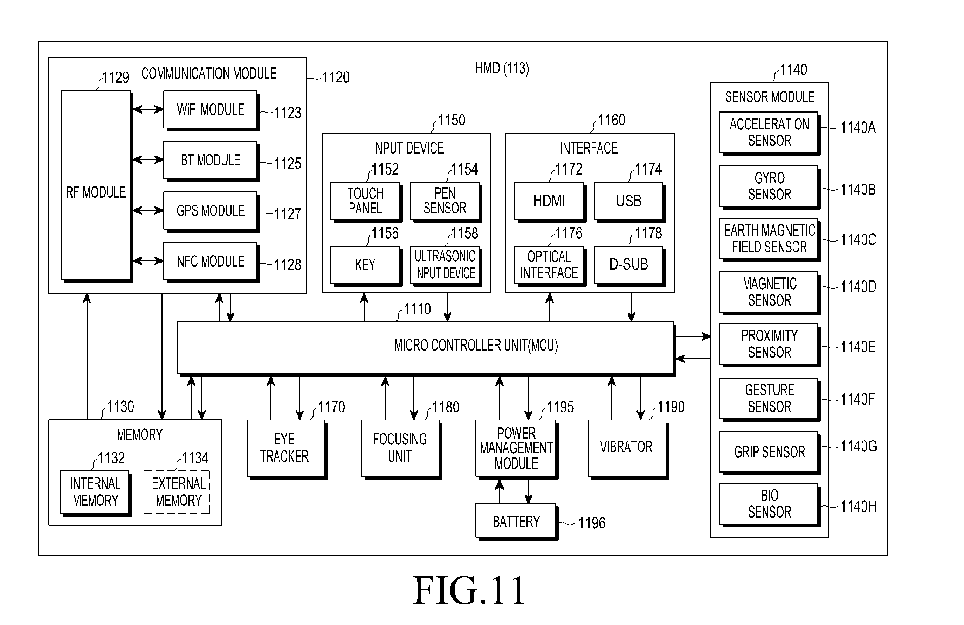

FIG. 11 is a block diagram illustrating an HMD according to an embodiment of the present disclosure.

Referring to FIG. 11, according to an embodiment of the present disclosure, the HMD 103 includes a controller (e.g., a Micro Controller Unit (MCU)) 1110, a communication module 1120, a memory 1130, a sensor module 1140, an input device 1150, an interface 1160, an eye tracker 1170, a focusing unit (or lens assembly) 1180, a vibrator 1190, a power management module 1195, and a battery 1196. Other components (e.g., the display) are excluded from the block diagram 1100 for ease of description. According to an embodiment of the present disclosure, some of the components shown in the block diagram 1100 may be included in the main frame 220, and others may be included in a display device (e.g., the electronic device 101 detachably coupled to the HMD 103).

The controller 1110 may include, e.g., a processor, and may control multiple hardware and software components connected to the controller 1110 by running, e.g., an Operating System (OS) or application programs, and the controller 1110 may process and compute various data. The controller 1110 may be implemented in, e.g., a System On Chip (SoC). According to an embodiment of the present disclosure, the controller 1110 may further include a Graphic Processing Unit (GPU) and/or an image signal processor. The controller 1110 includes at least some (e.g., the cellular module 1121) of the components shown in FIG. 11. The controller 1110 may load a command or data received from at least one of other components (e.g., a non-volatile memory) on a volatile memory, processes the command or data, and store various data in the non-volatile memory.

The communication module 1120 may have the same or a similar configuration as the communication interface 170 of FIG. 1. The communication module 1120 includes, for example, a WIreless FIdelity (Wi-Fi) module 1123, a BlueTooth (BT) module 1125, a GPS module 1127, a Near-Field Communication (NFC) module 1128, and a Radio Frequency (RF) module 1129.

The Wi-Fi module 1123, the BT module 1125, the GPS module 1127, or the NFC module 1128 may include a process for processing data communicated through the respective module. Two or more of the Wi-Fi module 1123, the BT module 1125, the GPS module 1127, and the NFC module 1128 may be included in a single Integrated Circuit (IC) or an IC package.

The RF module 1129 communicates data, e.g., communication signals (e.g., RF signals). The RF module 1129 may include, e.g., a transceiver, a Power Amplifier Module (PAM), a frequency filter, a Low Noise Amplifier (LNA), or an antenna. According to an embodiment of the present disclosure, at least one of the cellular module 1121, the Wi-Fi module 1123, the BT module 1125, the GPS module 1127, or the NFC module 1128 may communicate RF signals through a separate RF module 1129.

The memory 1130 includes, for example, an internal memory 1132 or an external memory 1134. The internal memory 1132 may include e.g., a volatile memory (e.g., a Dynamic Random Access Memory (RAM) (DRAM), a Static RAM (SRAM), a Synchronous DRAM (SDRAM), etc.) or a non-volatile memory (e.g., a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a flash memory (e.g., a NAND flash, or a NOR flash), a hard drive, or Solid State Drive (SSD).

The external memory 1134 may include a flash drive, e.g., a Compact Flash (CF) memory, a Secure Digital (SD) memory, a micro-SD memory, a mini-SD memory, an eXtreme Digital (xD) memory, or a MEMORY STICK^{™} memory card. The external memory 1134 may be functionally and/or physically connected with the HMD 103 via various interfaces.

For example, the sensor module 1140 measure physical quantity or detects an operational state of the HMD 103, and the sensor module 1140 may convert the measured or detected information into an electrical signal. The sensor module 1140 includes, for example, an acceleration sensor 1140A, a gyro sensor 1140B, an earth magnetic field sensor 1140C, a magnetic sensor 1140D, and a proximity sensor 1140E. The acceleration sensor 1140A senses a current state of the HMD 103 by measuring an acceleration of the HMD 103. The gyro sensor 1140B senses a current state of the HMD 103 by measuring an angle of the HMD 103. The earth magnetic field sensor 1140C or the magnetic sensor 1140E senses a current state of the HMD 103 by sensing a variation in capacitance or dielectric constant when the user is wearing the HMD 103.

Additionally or alternatively, the sensor module 1140 may further include a gesture sensor 1140F, a grip sensor 1140G, and a bio sensor 1140H. According to an embodiment of the present disclosure, the HMD 103 senses whether the user is wearing the HMD 103 through the proximity sensor 1140E or the grip sensor 1140G. Further, some or all elements of the sensor module 1140 may be implemented to be included in the electronic device 101 coupled with the HMD 103 in accordance with embodiments of the present disclosure.

According to an embodiment of the present disclosure, the sensor module 1140 senses at least one of IR recognition, pressure recognition, and a variation in capacitance (or dielectric constant) by the user wearing the HMD 103. The controller 1110 may determine whether the user is wearing the HMD 103 based on a result sensed by the sensor module 1140. The gesture sensor 1140F may sense a movement of the user's hand or finger. The controller 1110 may recognize and receive, as a user input, the user's movement sensed by the gesture sensor 1140F. According to an embodiment of the present disclosure, the gesture sensor 1140F may be implemented as a camera. The bio sensor 1140H may include, for example, an e-nose sensor, an ElectroMyoGraphy (EMG) sensor, an ElectroEncephaloGram (EEG) sensor, an ElectroCardioGram (ECG) sensor, and an iris sensor. The bio sensor 1140H may recognize bio information on the user.

According to an embodiment of the present disclosure, the sensor module 1140 further includes a control circuit for controlling at least one or more of the sensors included in the sensing module 1140.

The input unit 1150 includes, for example, a touch panel 1152, a key 1156, and a pen sensor 1154, or an ultrasonic input device 1158.

The touch panel 1152 may be implemented in the form of the touch panel 230 shown in FIG. 2, and may be positioned at a left or right side of the HMD 103. The touch panel 1152 may recognize touch a user input (e.g., a touch input or hovering input) from the user by at least one of capacitive, resistive, infrared, or ultrasonic methods. The touch panel 1152 may recognize the user's physical contact or a user's approach to the touch panel 1152. The touch panel 1152 may further include a tactile layer and may provide a user with a tactile reaction. The touch panel 1152 may further include a control circuit.

The pen sensor 1154 (which may be a digital pen sensor) may include, for example, a part of the touch panel 1152 or a separate sheet for recognition. The key 1156 may include, for example, a physical button, an optical key, or a key pad. The ultrasonic input device 1158 may use an input tool that generates an ultrasonic signal and enables the HMD 103 to identify data by sensing sound waves through a microphone.

The interface 1160 may have a same or similar configuration as the communication interface 170 shown in FIG. 1. The interface 1160 may include, for example, a USB interface 1174 and may further include, for example, an HDMI interface 1172, an optical interface 1176, or a D-subminiature (D-sub) interface 1178. Additionally or alternatively, the interface 1160 may include a Mobile High-definition Link (MHL) interface, a Secure Digital (SD) card/ MultiMedia Card (MMC) interface, or an Infrared Data Association (IrDA) standard interface.

The eye tracker 1170 traces the user's view when the user wears the HMD 103. The eye tracker 1170 determines the direction or angle of the user's view by sensing the movement of the head of a user that is wearing the HMD 103. The eye tracker 1170 may trace the user's view by using at least one of, e.g., an electrooculography (sensor), a coil system, a dual-Purkinje system, a bright pupil system, and a dark pupil system. Further, the eye tracker 1170 may further include a micro camera for tracing the user's view.

The focusing unit (e.g., adjustable optics) 1180 may measure the distance between the user's eyes (e.g., Inter-Pupil Distance (IPD), or the distance at which the user wearing the HMD 103 is able to view images fitting the user's vision, enabling the adjustment of the position of the electronic device 101 or the distance between the lenses (e.g., the lens 410) provided in the HMD 103. According to an embodiment of the present disclosure, the focusing unit 1180 may calculate the IPD based on the direction of the user's view traced by the eye tracker 1170.

A vibrator 1190 generates a vibration to shake the HMD 103, such as upwards and downwards, for example. According to an embodiment of the present disclosure, the vibrator 1190 generates vibrations corresponding to 3D images being viewed by the user, allowing the user to feel a Four-Dimensional (4D) effect. According to an embodiment of the present disclosure, when an event such as a call or alarm occurs in the electronic device 101, the vibrator 1190 may generate a vibration to inform the user of the occurrence of the event.

The power manager module 1195 may manage power of the HMD 103, for example. Although not shown, according to an embodiment of the present disclosure, the power management module 1195 may include a Power Management Integrated Circuit (PMIC), a charger IC, or a battery 1196 or a battery gauge. The PMIC may have a wired and/or wireless recharging scheme. The wireless charging scheme may include, for example, a magnetic resonance scheme, a magnetic induction scheme, or an electromagnetic wave based scheme, and an additional circuit, such as a coil loop, a resonance circuit, a rectifier, or the like may be added for wireless charging. The battery gauge measures an amount of remaining power of the battery 1196, a voltage, a current, or a temperature while the battery 1196 is being charged. The battery 1196 may include, e.g., a rechargeable battery or a solar battery.

According to an alternative embodiment of the present disclosure, the HMD 103 does not include the battery 1196. Instead, the HMD 103 may receive power from, for example, the electronic device 101 coupled with the HMD 103. Further, the power management module 1195 may request that the electronic device 101 supply power and may manage power supplied from the electronic device 101.

Each of the aforementioned components of the HMD 103 may include one or more parts, and the name of the part may vary depending on the type of the HMD 103. According to an embodiment of the present disclosure, the HMD 103 may be configured to include at least one of the above-described components, and may exclude some of the components or may include other additional components. According to an embodiment of the present disclosure, some of the components in the HMD 103 may be combined into an entity, but the entity may perform the same functions as the components may do.

According to an embodiment of the present disclosure, a Head-Mounted Device (HMD) for providing a Virtual Reality (VR) service is provided. The HMD includes a sensor module configured to sense whether a user is wearing the HMD; and a communication interface configured to transmit, to an electronic device, if the user is wearing the HMD, a first electrical signal indicating that the user is wearing the HMD.

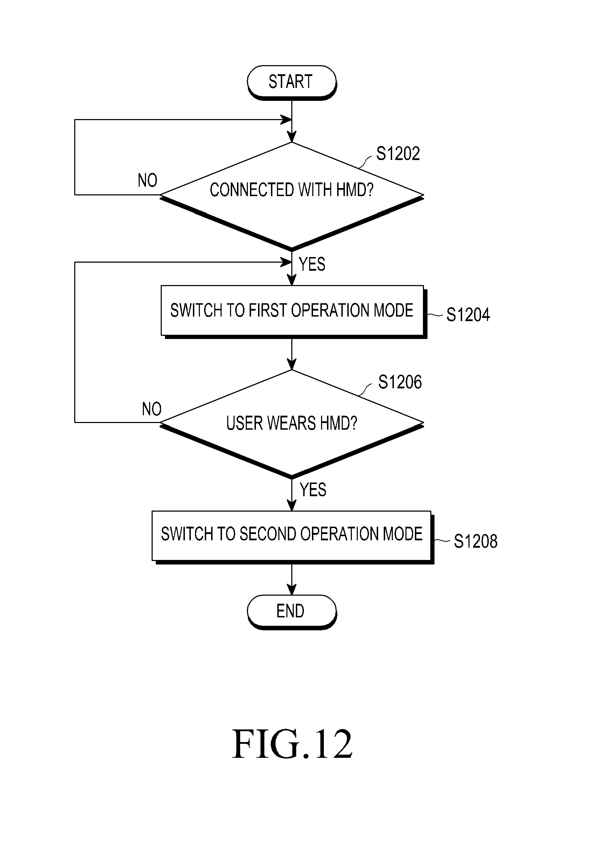

FIG. 12 is a flowchart illustrating a method for providing a Virtual Reality (VR) service by an electronic device according to an embodiment of the present disclosure.

Referring to FIG. 12, the processor 120 of the electronic device 101 determines whether the electronic device 101 is connected with the HMD 103. In step S1202, the processor 120 determines whether the electronic device 101 is attached to the HMD 103 by determining whether the electronic device 101 and the HMD 103 are connected with each other. According to an embodiment of the present disclosure, when receiving, from the HMD 103, an electric signal indicating that the electronic device 101 is attached to the main frame 220 of the HMD 103, the processor 120 may determine that the electronic device 101 and the HMD 103 are connected with each other. According to an embodiment of the present disclosure, an electrical signal indicating that the electronic device 101 is attached to the main frame 220 of the HMD 103 may be transferred from the communication interface 170 of the electronic device 101, particularly, a USB port, to the processor 120.

When it is determined in step S1202 that the electronic device 101 is connected with the HMD 103 ("Yes" in step S1202), the processor 120 switches the operation mode of the electronic device 101 into a first operation mode, in step S1204. The first operation mode is an operation mode of the electronic device 101 in which, although the electronic device 101 is attached to the HMD 103, the HMD 103 may not yet have been put on the user. In the first operation mode, the electronic device 101 may display a temporary image through the display 160. According to an embodiment of the present disclosure, in the first operation mode, the processor 120 may temporarily pause or terminate various operations running on the electronic device 101 (e.g., game play, voice call, video call, video playing, or display of messages or emails).

When it is determined in operation S1202 that the electronic device 101 is not connected with the HMD 103, ("No" in step S1202), a current state may be maintained until a connection with the HMD 103 is made.

Thereafter, the processor 120 of the electronic device 101 determines whether the user is wearing the HMD 103, in step S1206. According to an embodiment of the present disclosure, when receiving, from the HMD 103, an electrical signal indicating that the user is wearing the HMD 103, the processor 120 determines that the HMD 103 is put on the user. The HMD 103 transfers electrical signals generated by sensors in the HMD 103 (e.g., the proximity sensor 902 or mount/unmount sensor 1002) to the electronic device 101. The processor 120 determines whether the user wears the HMD 103 based on an electrical signal from the proximity sensor 902 or the mount/unmount sensor 1002. Alternatively, a sensor module pre-equipped in the electronic device 101 (e.g., a proximity sensor or mount/unmount sensor) may sense the user wearing the HMD 103 and transfer a sensed result to the processor 120.

When it is determined in step S1206 that the user is wearing the HMD 103 ("Yes" in step S1206), the processor 120 may switch the operation mode of the electronic device 101 into a second operation mode. The second operation mode is an operation mode of the electronic device 101 to provide a VR service. The electronic device 101 provides the user with a stereoscopic image including a left eye image and a right eye image in the second operation mode.

According to an embodiment of the present disclosure, in the second operation mode, the processor 120 may generate all the data (e.g., a 2D image or 3D image) displayed to provide a VR service to the user. For example, assuming that the user views a 3D-renderable 2D video using a VR service, the processor 120 may convert the 2D video into a 3D video and may provide the 3D video to the user through the VR service.

When it is determined in step S1206 that the user is not wearing the HMD 103 ("No" in step S1206), the processor 120 maintains the current state without taking further action. According to an embodiment of the present disclosure, the processor 120 maintains the first operation mode.

According to an embodiment of the present disclosure, a method for providing a Virtual Reality (VR) service by an electronic device is provided. The method includes: determining whether the electronic device is connected with a Head-Mounted Device (HMD); if the electronic device is connected with the HMD, determining whether a user is wearing the HMD while the electronic device is connected with the HMD; and if the user is wearing the HMD while the electronic device is connected with the HMD, switching an operation mode of the electronic device to a first operation mode in which the electronic device provides the VR service to the user.

According to an embodiment of the present disclosure, a method for providing a Virtual Reality (VR) service by a Head-Mounted Device (HMD) is provided. The method includes sensing whether a user is wearing the HMD while the HMD is connected with an electronic device; and transmitting, to the electronic device, if the user is wearing the HMD, a first electrical signal indicating that the user is wearing the HMD.

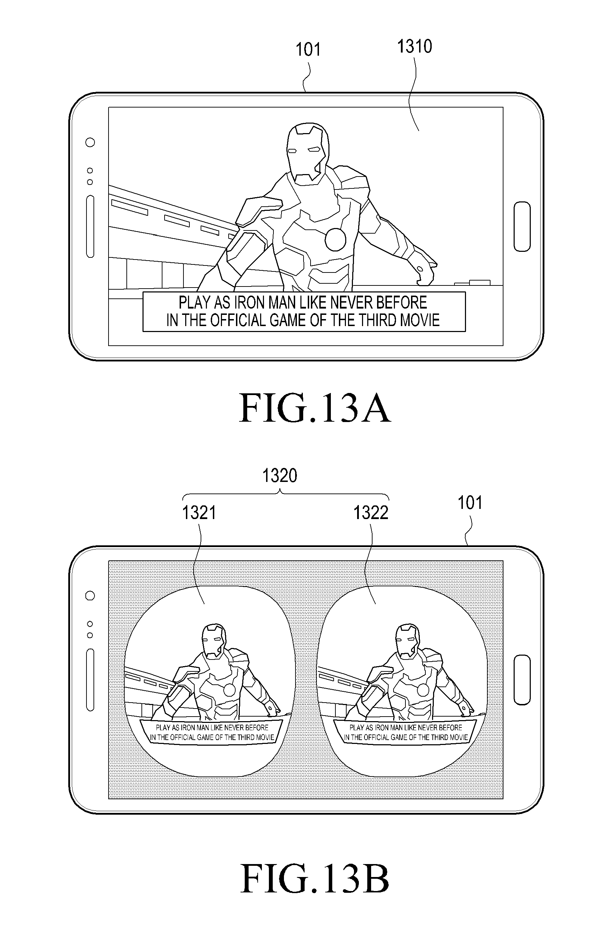

FIG. 13A and 13B are diagrams illustrating an example of displaying a monoscopic image and a stereoscopic image by an electronic device according to an embodiment of the present disclosure.

FIG. 13A illustrates a screen where the electronic device 101 displays a monoscopic image through the display 160, and FIG. 13B illustrates a screen where the electronic device 101 displays a stereoscopic image 1320 through the display 160.

FIG. 13A shows a screen of the electronic device 101 when the electronic device 101 is not attached to the HMD 103 or when, although attached to the electronic device 101, the HMD 103 is not worn by the user. FIG. 13B shows a screen displayed through the display 160 of the electronic device 101 when the user wears the electronic device 101-attached HMD 103.

As described above, when sensing that the user is wearing the electronic device 101-attached HMD 103, the processor 120 of the electronic device 101 displays the stereoscopic image 1320. The stereoscopic image 1320 includes two images 1321 and 1322 that may respectively indicate a left eye image 1321 viewed by the user's left eye and a right eye image 1322 viewed by the user's right eye. As described above, the processor 120 splits the monoscopic image 1320 into the left eye image 1321 and the right eye image 1322. The user may feel a 3D effect by viewing the two different images (the left eye image 1321 and the right eye image 1322) through his left and right eyes.

According to an embodiment of the present disclosure, the processor 120 of the electronic device 101 may generate a stereoscopic image 1320 of the same size as the size of each of the lenses 410 provided in the HMD 103 and may display the stereoscopic image 1320 through the display 160.

According to an embodiment of the present disclosure, when the user wears the HMD 103, the processor 120 runs a VR launcher. Further, the processor 120 splits the monoscopic image 1310 into the left eye image 1321 and the right eye image 1322 and displays the split left eye image 1321 and right eye image 1322 through the display 160. Alternatively, the left eye image 1321 and right eye image 1322 shown in FIG. 13B may be the same image. When the electronic device 101 is attached to the HMD 103 by the user or when the user wears the HMD 103 with the electronic device 101 attached to the HMD 103, the processor 120 controls the display 160 to split the monoscopic image 1310, which is being displayed through the display 160, into the left eye image 1321 and the right eye image 1322 and display the left eye image 1321 and the right eye image 1322. Since the left eye image 1321 is the same as the right eye image 1322, the electronic device 101 provides a 2D effect similar to that when displaying the monoscopic image 1310.

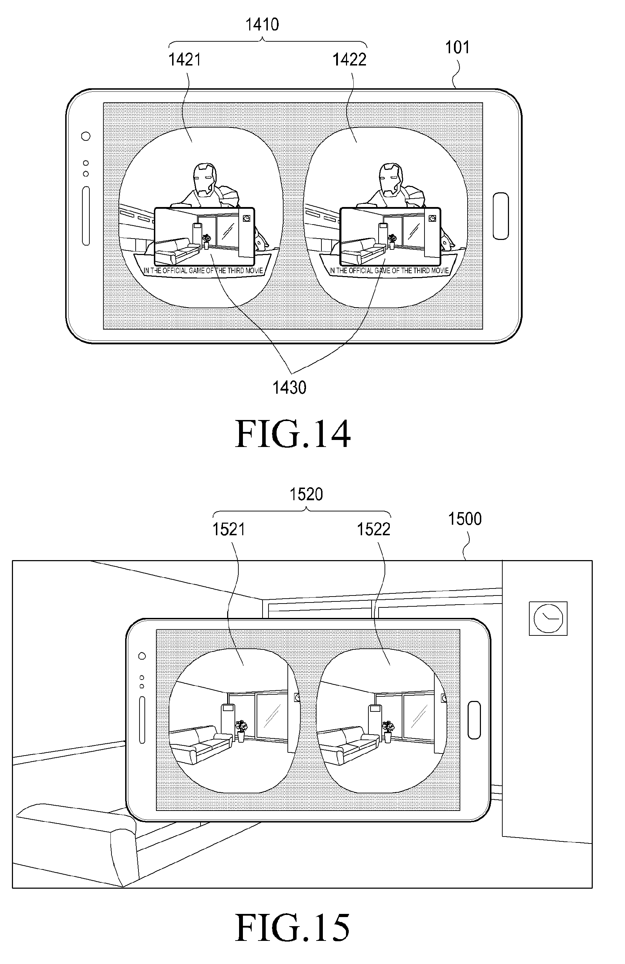

FIG. 14 is a diagram illustrating an example of displaying a monoscopic image and a stereoscopic image by an electronic device according to an embodiment of the present disclosure. It is assumed in connection with FIG. 14 that the electronic device 101 displays a stereoscopic image 1410 for providing a VR service while simultaneously displaying images 1430 input through a camera pre-equipped on the rear surface of the electronic device 101.

As shown in FIG. 14, according to an embodiment of the present disclosure, when providing a VR service, the electronic device 101 displays a stereoscopic image 1410 including a left eye image 1421 and a right eye image 1422. Further, in response to a user input, the electronic device 101 also plays video data (e.g., contents offerable in a virtual environment, such as video, game image, or browser) while simultaneously displaying the images 1430 input through the camera provided on the rear surface of the electronic device 101 on the stereoscopic image 1410. In this case, the images 1430 input through the camera are displayed on the left eye image 1421 and right eye image 1422 of the video data. Further, the same image 1430 input through the camera may be displayed on the left and right sides, allowing the user a 2D effect. In other words, the image 1410 may be displayed in 3D, and the images 1430 may be displayed in 2D.

Alternatively, the images 1430 input through the camera may be a stereoscopic image with a left eye image and a right eye image different from each other. According to an embodiment of the present disclosure, the electronic device 101 may have two or more cameras on its rear surface. The processor 120 may separately display images input through the cameras as the left eye image and right eye image as shown in FIG. 14. Further, the processor 120 may provider the user a 3D effect by displaying the left eye image and right eye image to be different from each other, i.e., by displaying images input through the cameras as a stereoscopic image.

FIG. 15 is a diagram illustrating an example of providing a VR service by an electronic device according to an embodiment of the present disclosure. It is assumed in connection with FIG. 15 that the electronic device 101 drives a camera pre-equipped on the rear surface thereof.

Referring to FIG. 15, the processor 120 of the electronic device 101 may display in 2D or 3D an image 1500 input through the camera provided on the rear surface of the electronic device 101.

According to an embodiment of the present disclosure, when one camera is provided on the rear surface of the electronic device 101, the processor 120 may control the display 160 to split the image 1500 input through the camera into a left eye image 1521 and a right eye image 1522 and display the left eye image 1521 and the right eye image 1522 as shown in FIG. 15. In this case, the left eye image 1521 may be the same as the right eye image 1522. According to an embodiment of the present disclosure, when two or more cameras are provided on the rear surface of the electronic device 101, the processor 120 may control the display 160 to split the images 1500 input through the cameras into a left eye image 1521 and a right eye image 1522 and display the left eye image 1521 and the right eye image 1522 as shown in FIG. 15. In this case, the left eye image 1521 is different from the right eye image 1522. Since the left eye image 1522 is different from the right eye image 1522, the user may recognize the image 1520 as a 3D image.

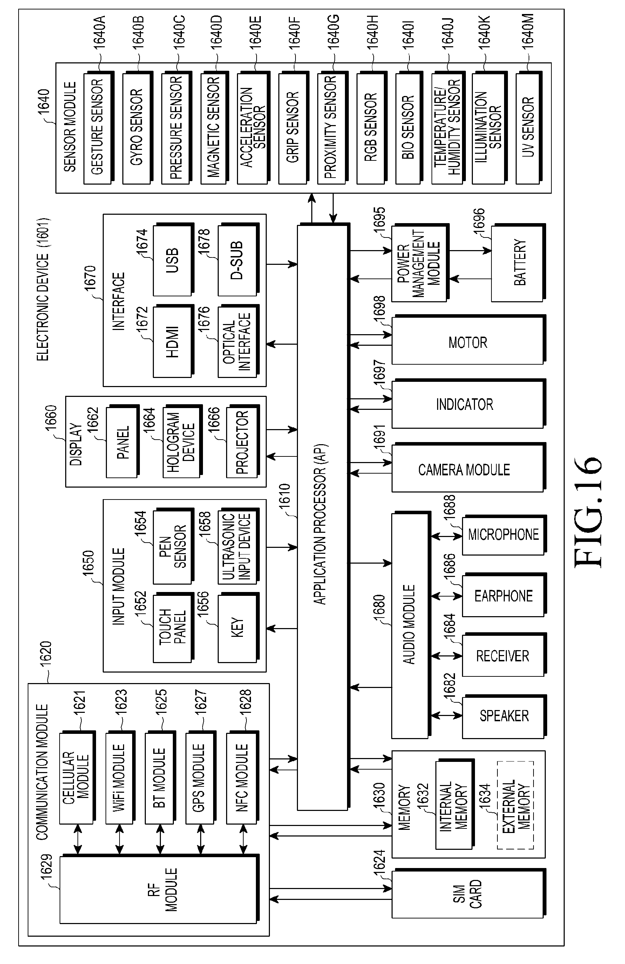

FIG. 16 is a block diagram illustrating an electronic device according to an embodiment of the present disclosure.

Referring to FIG. 16, an electronic device 1601 may be configured to include all of or a part of the configuration of, e.g., the electronic device 101 shown in FIG. 1. The electronic device 1601 includes one or more Application Processors (APs) 1610, a communication module 1620, an SIM (subscriber identification module) card 1624, a memory 1630, a sensor module 1640, an input device 1650, a display 1660, an interface 1670, an audio module 1880, a camera module 1691, a power management module 1695, a battery 1696, an indicator 1697, and a motor 1698.

The AP 1610 controls multiple hardware and software components connected to the AP 1610 by running, for example, an operating system or application programs, and the AP 1610 processes and computes various data. The AP 1610 may be implemented in an SoC, for example. According to an embodiment of the present disclosure, the AP 1610 may further include a GPU and/or an image signal processor. The AP 1610 may include some of the other components shown in FIG. 16 (e.g., the cellular module 1621). The AP 1610 may load a command or data received from at least one of other components (e.g., a non-volatile memory) on a volatile memory, process the command or data, and store various data in the non-volatile memory.

The communication module 1620 may have the same or similar configuration to the communication interface 170 of FIG. 1. The communication module 1620 may include, e.g., a cellular module 1621, a Wi-Fi module 1623, a BT module 1625, a GPS module 1627, an NFC module 1628, and an RF module 1629.

The cellular module 1621 may provide, e.g., a voice call, video call, text service or Internet service, through a communication network. According to an embodiment of the present disclosure, the cellular module 1621 may perform identification or authentication on the electronic device 1601 in the communication network using a Subscriber Identification Module (SIM) card 1624. According to an embodiment of the present disclosure, the cellular module 1621 may perform some of the functions providable by the AP 1610. According to an embodiment of the present disclosure, the cellular module 1621 may include a CP.

The Wi-Fi module 1623, the BT module 1625, the GPS module 1627, or the NFC module 1628 may include a process for processing data communicated through the module, for example. Two or more of the cellular module 1621, the Wi-Fi module 1623, the BT module 1625, the GPS module 1627, and the NFC module 1628 may be included in a single IC or an IC package.

The RF module 1629 may communicate data, e.g., communication signals (e.g., RF signals). The RF module 1829 may include, e.g., a transceiver, a PAM, a frequency filter, an LNA, or an antenna. According to an embodiment of the present disclosure, at least one of the cellular module 1621, the Wi-Fi module 1623, the BT module 1625, the GPS module 1627, or the NFC module 1628 may communicate RF signals through a separate RF module 1629.

The SIM card 1624 includes, for example, a card including a subscriber identification module and/or an embedded SIM, and may contain unique identification information (e.g., an Integrated Circuit Card IDentifier (ICCID) or subscriber information (e.g., an International Mobile Subscriber Identity (IMSI)).

The memory 1630 (e.g., the memory 130) may include, e.g., an internal memory 1632 or an external memory 1634. The internal memory 1632 may include at least one of, e.g., a volatile memory (e.g., a DRAM, an SRAM, an SDRAM, etc.) or a non-volatile memory (e.g., an OTPROM, a PROM, an EPROM, an EEPROM, a mask ROM, a flash ROM, a flash memory (e.g., a NAND flash, or a NOR flash), a hard drive, or SSD.

The external memory 1634 may include a flash drive, e.g., a CF memory, an SD memory, a micro-SD memory, a min-SD memory, an xD memory, or a MEMORY STICK^{™} memory card. The external memory 1634 may be functionally and/or physically connected with the electronic device 1601 via various interfaces.

For example, the sensor module 1640 measures a physical quantity or detects an operational state of the electronic device 1601, and the sensor module 1640 converts the measured or detected information into an electrical signal. The sensor module 1640 includes, for example, a gesture sensor 1640A, a gyro sensor 1640B, an air pressure sensor 1640C, a magnetic sensor 1640D, an acceleration sensor 1640E, a grip sensor 1640F, a proximity sensor 1640G, a color sensor 1640H such as a Red-Green-Blue (RGB) sensor, a bio sensor 1640I, a temperature/humidity sensor 1640J, an illumination sensor 1640K, or an Ultra Violet (UV) sensor 1640M. Additionally or alternatively, the sensing module 1640 may include, e.g., an E-nose sensor, an EMG sensor, an EEG sensor, an ECG sensor, an IR sensor, an iris sensor, or a finger print sensor. The sensor module 1640 may further include a control circuit for controlling at least one or more of the sensors included in the sensing module. According to an embodiment of the present disclosure, the electronic device 1601 may further include a processor configured to control the sensor module 1640 as part of an AP 1610 or separately from the AP 1610, and the electronic device 1601 may control the sensor module 1640 while the AP 1610 is in a sleep mode.

According to an embodiment of the present disclosure, the processor 1610 (e.g., the processor 120) may sense a movement of the user wearing the HMD 103 where the electronic device 1601 (e.g., the electronic device 101) is mounted using the earth magnetic field sensor 1640D or acceleration sensor 1640E. For example, the processor 1610 may determine the movement of the user's head (e.g., tilting, shaking up and down or right and left, sticking out, pulling back, and turning clockwise or counterclockwise the user's neck) using sensing data measured by the earth magnetic field sensor 1640D or acceleration sensor 1640. Further, the processor 1610 may control the screen provided by the electronic device 1601 according to the determined movement of the user's head.

For example, when the user tilts his head, the processor 1610 may control the electronic device 1601 to display the screen while the screen is tilted at the tilted angle in the tilted direction. For example, when the user moves his head upward, the processor 1610 may control the electronic device 1601 to zoom in an upper portion of the screen. For example, when the user moves his head down, the processor 1610 may control the electronic device 1601 to zoom in a lower portion of the screen. For example, when the user moves his head up and down, the processor 1610 may control the electronic device 1601 so that the screen is moved up and down according to the movement of the user's head.

For example, when the user turns left his head, the processor 1610 may control the electronic device 1601 to zoom in a left side of the screen. For example, when the user turns his head right, the processor 1610 may control the electronic device 1601 to zoom in a right side of the screen. For example, when the user shakes his head left and right, the processor 1610 may control the electronic device 1601 so that the screen shakes left and right according to the movement of the user's head.

For example, when the user sticks out his head, the processor 1610 may control the electronic device 1601 to magnify the screen. For example, when the user pulls back his head, the processor 1610 may control the processor 1610 to shrink the screen. For example, when the user turns his head counterclockwise, the processor 1610 may control the electronic device 1601 to go back to the previous menu. For example, when the user turns his head clockwise, the processor 1610 may control the electronic device 1601 to display contents corresponding to the menu currently selected.

The input unit 1650 includes, for example, a touch panel 1652, a pen sensor 1654 (e.g. a digital pen sensor), a key 1656, or an ultrasonic input device 1658. The touch panel 1652 may use capacitive, resistive, infrared, or ultrasonic methods. The touch panel 1652 may further include a control circuit. The touch panel 1652 may further include a tactile layer and may provide a user with a tactile reaction.

The pen sensor 1654 may include, e.g., a part of the touch panel 1652 or a separate sheet for recognition. The key 1656 may include, for example, a physical button, optical key or key pad. The ultrasonic input device 1658 may use an input tool that generates an ultrasonic signal and enable the electronic device 1601 to identify data by sensing the ultrasonic signal to a microphone 1688.

The display 1660 (e.g., the display 160) may include a panel 1662, a hologram device 1664, or a projector 1666. The panel 1662 may have the same or similar configuration to the display 160 of FIG. 1. The panel 1662 may be a flexible, transparent, or wearable panel. The panel 1662 may also be incorporated with the touch panel 1652 in a module. The hologram device 1664 makes 3D images (holograms) in the air by using light interference. The projector 1666 displays an image by projecting light onto a screen. The screen may be, for example, located inside or outside of the electronic device 1601. In accordance with an embodiment of the present disclosure, the display 1660 may further include a control circuit to control the panel 1662, the hologram device 1664, or the projector 1666.

The interface 1670 includes, for example, an HDMI interface 1672, a USB interface 1674, an optical interface 1676, and a D-sub interface 1678. The interface 1670 may be included in, for example, the communication interface 170 shown in FIG. 1. Additionally or alternatively, the interface 1670 may include an MHL interface, an SD card/ MMC interface, or an IrDA standard interface.

The audio module 1680 converts sound into an electrical signal or vice versa. A part of the audio module 1680 may be included in, for example, the input/output interface 150 as shown in FIG. 1. The audio module 1680 processes sound information input or output through, for example, a speaker 1682, a receiver 1684, an earphone 1686, or the microphone 1688.

For example, the camera module 1691 may be a device for capturing still images and videos, and may include, according to an embodiment of the present disclosure, one or more image sensors (e.g., front and back sensors), a lens, an Image Signal Processor (ISP), or a flash such as an LED or a xenon lamp.

The power manager module 1695 manages power of the electronic device 1601. Although not shown, according to an embodiment of the present disclosure, a PMIC, a charger IC, or a battery gauge is included in the power manager module 1695. The PMIC may use a wired and/or wireless recharging scheme. The wireless charging scheme may include, for example, a magnetic resonance scheme, a magnetic induction scheme, or an electromagnetic wave based scheme, and an additional circuit, such as a coil loop, a resonance circuit, a rectifier, or the like may be added for wireless charging. The battery gauge measures an amount of remaining power of the battery 1696, a voltage, a current, or a temperature while the battery 1696 is being charged. The battery 1696 may include, e.g., a rechargeable battery or a solar battery.

The indicator 1697 indicates a particular state of the electronic device 1801 or a part of the electronic device (e.g., the AP 1610), including e.g., a booting state, a message state, or recharging state. The motor 1698 converts an electrical signal to a mechanical vibration and may generate a vibration or haptic effect. Although not shown, a processing unit for supporting mobile TV, such as a GPU may be included in the electronic device 1801. The processing unit for supporting mobile TV may process media data conforming to a standard for DMB, DVB, or MediaFLO.

Each of the aforementioned components of the electronic device 1601 may include one or more parts, and the name of the part may vary depending on the type of the electronic device 1601. According to an embodiment of the present disclosure, the electronic device 1601 may be configured to include at least one of the above-described components, and may exclude one or more of the components or may include other additional components. According to an embodiment of the present disclosure, some of the components in the electronic device 1601 may be combined into a single entity that performs the same functions as the individual components.

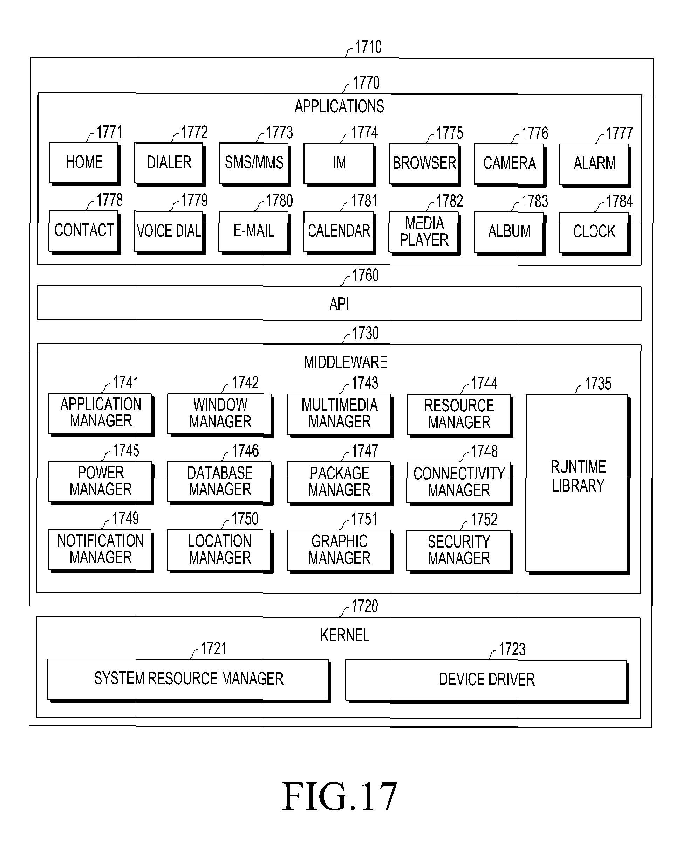

FIG. 17 is a block diagram illustrating a program module according to an embodiment of the present disclosure.

According to an embodiment of the present disclosure, the program module 1710 (e.g., the programs 140 in FIG. 1) may include OS controlling resources related to the electronic device 101 and/or various applications (e.g., the applications 147) driven on the operating system. The operating system may include, for example, Android, iOS, Windows, Symbian, Tizen, or Bada.

The program 1710 includes, for example, a kernel 1720, middleware 1730, an API 1760, and applications 1770. At least a part of the program module 1710 may be preloaded on the electronic device 101 or may be downloaded from a server (e.g., the server 106).

The kernel 1720 (e.g., the kernel 141 of FIG. 1) includes, for example, a system resource manager 1721 and a device driver 1723. The system resource manager 1721 performs control, allocation, or recovery of system resources. According to an embodiment of the present disclosure, the system resource manager 1721 may include a process managing unit, a memory managing unit, or a file system managing unit. The device driver 1723 may include, for example, a display driver, a camera driver, a Bluetooth driver, a shared memory driver, a USB driver, a keypad driver, a Wi-Fi driver, an audio driver, or an Inter-Process Communication (IPC) driver.

The middleware 1730 provides various functions to the applications 1770 through the API 1760 so that the applications 1770 may efficiently use limited system resources in the electronic device 101 or provide functions jointly required by applications 1770. According to an embodiment of the present disclosure, the middleware 1730 (e.g., middleware 143) includes a runtime library 1735, an application manager 1741, a window manager 1742, a multimedia manager 1743, a resource manager 1744, a power manager 1745, a database manager 1746, a package manager 1747, a connectivity manager 1748, a notification manager 1749, a location manager 1750, a graphic manager 1751, and a security manager 1752.

The runtime library 1735 may include a library module used by a compiler in order to add a new function through a programming language while the applications 1770, for example, are being executed. The runtime library 1735 performs input/output management, memory management, or operation on arithmetic functions.

The application manager 1741 manages the life cycle of at least one application of, e.g., the applications 1770. The window manager 1742 manages GUI resources used on the screen. The multimedia manager 1743 determines which formats are necessary to play various media files and use a codec appropriate for a format to perform encoding or decoding on media files. The resource manager 1744 manages resources, such as source code of at least one of the applications 1770, memory or storage space.

The power manager 1745 may operate together with, e.g., a Basic Input/Output System (BIOS) to manage battery or power and provide power information necessary for operating the electronic device 101. The database manager 1746 generates, searches, or modifies a database to be used in at least one of the applications 1770. The package manager 1747 manages installation or update of an application that is distributed in the form of a package file.

The connectivity manager 1748 manages wireless connectivity, such as Wi-Fi or Bluetooth. The notification manager 1749 displays or outputs notifications of events of the user (e.g., an incoming message, an appointment, or a proximity notification) without interfering with the user. The location manager 1750 manages location information on the electronic device 101. The graphic manager 1751 manages graphic effects to be offered to the user and their related user interface. The security manager 1752 provides various security functions necessary for system security or user authentication. According to an embodiment of the present disclosure, when the electronic device 101 has a telephony capability, the middleware 1730 may further include a telephony manager for managing voice call or video call functions of the electronic device 101.

The middleware 1730 may include a middleware module forming a combination of various functions of the above-described components. The middleware 1730 provides a specified module per type of the operating system in order to provide a differentiated function. Further, the middleware 1730 may dynamically omit some existing components depicted in FIG. 17 or add new components in accordance with embodiments of the present disclosure.

The API 1760 (e.g., the API 145) is a set of API programming functions and may have different configurations depending on operating systems. For example, in the case of Android or iOS, one API set may be provided per platform, and in the case of Tizen, two or more API sets may be offered per platform.

The applications 1770 (e.g., the applications processor 147) include applications that provide various functions, such as a home application 1771, a dialer application 1772, a Short Message Service (SMS)/Multimedia Messaging Service (MMS) application 1773, an Instant Message (IM) application 1774, a browser application 1775, a camera application 1776, an alarm application 1777, a contact application 1778, a voice dial application 1779, an email application 1780, a calendar application 1781, a media player application 1782, an album application 1783, and a clock application 1784. The application 1770 may also include a health-care application (e.g., for measuring the degree of workout or blood sugar level), or an application for providing environmental information (e.g., provision of air pressure, moisture, or temperature information).

According to an embodiment of the present disclosure, the applications 1770 may include an application (hereinafter, an "information exchanging application") that supports information exchange between the electronic device 101 and an external electronic device 102 or 104. Examples of the information exchange application may include, but are not limited to, a notification relay application for transferring specific information to the external electronic device, or a device management application for managing the external electronic device.

For example, the notification relay application may include a function for relaying notification information generated from other applications of the electronic device 101 (e.g., the SMS/MMS application, email application, health-care application, or environmental information application) to the external electronic device 102 or 104. Further, the notification relay application may receive notification information from, e.g., the external electronic device and may provide the received notification information to the user. The device management application may perform at least some functions of the external electronic device (e.g., the electronic device 104) communicating with the electronic device 101 (for example, turning on/off the external electronic device (or some components of the external electronic device) or control of brightness (or resolution) of the display), and the device management application may manage (e.g., install, delete, or update) an application operating in the external electronic device or a service (e.g., call service or message service) provided from the external electronic device.

According to an embodiment of the present disclosure, the applications 1770 may include an application (e.g., a health-care application) designated depending on the attribute (e.g., as an attribute of the electronic device 101, the type of electronic device is a mobile medical device) of the external electronic device 102 or 104. According to an embodiment of the present disclosure, the applications 1770 may include an application received from the external electronic device 102, 104 or the server 106. According to an embodiment of the present disclosure, the applications 1770 may include a preloaded application or a third party application downloadable from a server. The names of the components of the program module 1710 according to the shown embodiment may be varied depending on the type of operating system.

According to an embodiment of the present disclosure, at least a part of the program module 1710 may be implemented in software, firmware, hardware, or in a combination of two or more thereof. At least a part of the programming module 1710 may be implemented (e.g., executed) by e.g., a processor (e.g., the AP 1810). At least a part of the program module 1710 may include e.g., a module, program, routine, set of instructions, process, or the like for performing one or more functions. Although FIG. 17 is described with reference to the electronic device 101 as an example, the program module of FIG. 17 is also applicable to the electronic devices 102 and 104, the HMD 103, and the server 106 in accordance with embodiments of the present disclosure.

Herein, the term "module" may refer to a unit including hardware, software, firmware, or a combination thereof. The term "module" may be interchangeably used with the terms "unit", "logic", "logical block", "component", or "circuit". A module may be a minimum unit or part of an integrated component. A module may be a minimum unit or part for performing one or more functions. A module may be implemented mechanically or electronically. For example, a module may include at least one of Application Specific Integrated Circuit (ASIC) chips, Field Programmable Gate Arrays (FPGAs), or Programmable Logic Arrays (PLAs) that perform operations that have already been known or will be developed in the future.

According to an embodiment of the present disclosure, at least a part of the device (e.g., modules or their functions) or method (e.g., operations) may be implemented as instructions stored in a computer-readable storage medium e.g., in the form of a program module. The instructions, when executed by a processor (e.g., the processor 120), may enable the processor to carry out a corresponding function. The computer-readable storage medium may be, for example, the memory 130.

The computer-readable storage medium may include a hardware device, such as hard discs, floppy discs, and magnetic tapes (e.g., a magnetic tape), optical media such as Compact Disc (CD) Read Only Memories (ROMs) (CD-ROMs) and DVDs, magnetooptical media such as floptical disks, ROMs, Random Access Memories (RAMs), flash memories, and/or the like. Examples of the program instructions may include not only machine language codes but also high-level language codes that are executable by various computing means using an interpreter. The aforementioned hardware devices may be configured to operate as one or more software modules to carry out certain embodiments of the present disclosure, and vice versa.

Modules or programming modules in accordance with various embodiments of the present disclosure may include at least one or more of the aforementioned components, omit some of these components, or further include other additional components. Operations performed by modules, programming modules or other components in accordance with various embodiments of the present disclosure may be carried out sequentially, simultaneously, repeatedly, or heuristically. Furthermore, some of the operations may be performed in a different order, or omitted, or include other additional operation(s).

While the present disclosure has been shown and described with reference to certain embodiments thereof, it will be understood by those skilled in the art that various changes in form and details may be made therein without departing from the spirit and scope of the present disclosure as defined by the appended claims and their equivalents.

## Claims

1. A method for providing a Virtual Reality (VR) service by an electronic device, the method comprising:
determining whether the electronic device is connected with a Head-Mounted Device (HMD);
if the electronic device is connected with the HMD, determining whether a user is wearing the HMD while the electronic device is connected with the HMD; and
if the user is wearing the HMD while the electronic device is connected with the HMD, switching an operation mode of the electronic device to a first operation mode in which the electronic device provides the VR service to the user.

2. The method of claim 1, further comprising:
if the user is not wearing the HMD while the electronic derive is connected with the HMD, maintaining a second operation mode.

3. The method of claim 2, wherein determining whether the electronic device is connected with the HMD comprises:
if a signal indicating that the electronic device is connected with the HMD is received from the HMD,
switching the operation mode of the electronic device to the second operation mode.

4. The method of any of claims 1 to 3 wherein determining whether the user is wearing the HMD comprises:
if a signal indicating that the user is wearing the HMD is received from the HMD, determining that the user is wearing the HMD.

5. The method of any preceding claim, further comprising:
if the electronic device does not receive a signal indicating that the user is wearing the HMD, determining that the user is not wearing the HMD.

6. The method of any preceding claim, further comprising:
if the electronic device is connected with the HMD, displaying a temporary image or driving a Three-Dimensional (3D) engine to provide the VR service.

7. The method of claim 6, wherein the temporary image includes at least one of a black image, a logo image, and an image preset by the user.

8. The method of any preceding claim, wherein determining whether the electronic device is connected with the HMD comprises sensing, through a communications interface of the electronic device, whether the electronic device is connected with the HMD.

9. The method of any preceding claim, wherein determining whether the user is wearing the HMD while the electronic device is connected with the HMD comprises:
sensing whether the user is wearing the HMD through a sensor module; and
if sensing that the user wears the HMD through the sensor module, determining that the user wears the HMD.

10. An electronic device for providing a Virtual Reality (VR) service, the electronic device comprising:
a display; and
a processor configured to:
determine whether a user is wearing a Head-Mounted Device (HMD), and
if the user is wearing the HMD, switching to a first operation mode of the electronic device in which the electronic device provides the VR service to the user through the display.

11. The electronic device of claim 10, wherein, if the user is not wearing the HMD, the processor maintains a second operation mode.

12. The electronic device of claims 10 or 11, further comprising a communication interface configured to receive, from the HMD, a signal indicating that the electronic device is connected with the HMD,
wherein the processor is further configured to determine whether the user is wearing the HMD, if the communication interface receives, from the HMD, the signal indicating that the electronic device is connected with the HMD.

13. The electronic device of claim 12, wherein the processor is further configured to determine that the user is not wearing the HMD, if the communication interface does not receive the signal indicating that the electronic device is connected with the HMD.

14. The electronic device of claim 10, wherein the processor is further configured to display a temporary image through the display or drive a Three-Dimensional (3D) engine to provide the VR service, if the processor determines that the electronic device is connected with the HMD.

15. The electronic device of claim 14, wherein the temporary image is at least one of a black image, a logo image, and an image preset by the user.
